# EUROPEAN PATENT SPECIFICATION

(11) **EP 1 736 507 B1**
(45) Date of publication and mention of the grant of the patent: **19.09.2007**
(21) Application number: 06076118.6
(22) Date of filing: 26.05.2006
(51) Int. Cl.: C08L 7/00, C08L 9/00, C08K 7/02, B60C 1/00

(54) **Rubber composition for studless tire tread**
Kautschukzusammensetzung für spikelose Reifenlaufflächen
Composition de caoutchouc pour bande de roulement de pneumatique sans crampons

(30) Priority: 03.06.2005 KR 20050047548; 03.06.2005 KR 20050047549
(43) Date of publication of application: 27.12.2006
(73) Proprietor: Hankook Tire Co., Ltd., Gangnam-Gu Seoul 135-911 (KR)
(72) Inventor: Kim, Jung Tae 401-501,Yeolmaemaeul 4-danji, Daejeon, 305-330 (KR); Kim, Yong Jin 105-903, Hana Apt., Daejeong, 305-345 (KR); Kim, Sang Goo Lucky Hana Apt. 101-1203, Daejeon, 305-345 (KR)
(74) Representative: Esteban Perez-Serrano, Maria Isabel

(56) References cited:
- EP-A2- 0 329 589
- EP-A2- 1 213 130
- EP-A2- 1 452 342
- WO-A-20/05026239
- US-A1- 2002 148 545

## Description

### BACKGROUND OF THE INVENTION

This non-provisional application claims priority under U.S.C. § 119(a) from Korean Patent Application No. 2005-47548 filed on June 3, 2005 and Korean Patent Application No. 2005-47549 filed on June 3, 2005, which is herein incorporated by reference.

### FIELD OF THE INVENTION

The present invention relates, generally, to a rubber composition for a studless tire tread, and more particularly, to a rubber composition for a studless tire tread, in which natural rubber, styrene-butadiene rubber and butadiene rubber, serving as raw rubber, for use in a typical rubber composition for a studless tire tread, are appropriately mixed with a predetermined polyaramide fiber, thereby increasing not only driving force and braking power on snowy and icy roads in the winter season but also handling stability on dry roads and wear resistance.

### DESCRIPTION OF THE RELATED ART

Conventionally, winter tire is largely classified into spike tire and studless tire. In particular, the spike tire, in which spike pins are mounted to a tread in order to increase frictional force in the snowy and icy region, is advantageous because it exhibits excellent braking performance and driving performance on snowy and icy roads.

However, in the case where tires provided with spike pins move not on snowy and icy roads but on general roads, the ride quality is poor and environmental pollution, such as noise, dust and damage to the road, is caused. Thus, there is a trend of prohibiting the use of such tires in almost all countries. In the case of tires provided with rubber spikes, since the pin is more quickly worn than the tread rubber, it has drawbacks, such as easy breakage during the use thereof.

Further, various attempts have been made to increase braking performance on snowy and icy roads by using tools that complement the spike or by applying a novel polymer. Although efforts for improving novel tire patterns and structures have produced good results, more improvements are needed.

In addition, tire products equipped with rubber spike pins, functioning as micro spikes, resulting from a curing process at room temperature through the control of a glass transition temperature, have been commercialized. Moreover, tire products containing silica, acting to increase braking power on wet roads and to decrease fuel consumption, have been proposed.

Meanwhile, as studless tires, general studless tires, studless tires using an organic foaming agent, and studless tires using foreign material are exemplary. Of these tires, the studless tires using an organic foaming agent are manufactured by mixing tire tread rubber with an organic foaming agent and then vulcanizing the mixture. This tire has been introduced according to the concept in which the contact area between the road and the tread is increased by a microcell effect due to pores formed upon vulcanization, thus increasing the frictional force and ice gripping power, leading to a shortened braking distance of vehicles on snowy and icy roads and prevention of slip thereof.

Although there is an effect of improved performance of such a tire on snowy and icy roads even through only a foaming process, a problem of decreased wear resistance due to the low rigidity of blocks of the tread is caused. Further, upon the final stage of use of the tire, the rigidity and hardness of the blocks are increased by an aging phenomenon, undesirably reducing driving and braking performance on snowy and icy roads.

In the case of products that use foreign material, since the foreign material dispersed in the tread rubber composition does not form a chemical bond with base rubber but forms a physical bond therewith, it is readily separated, resulting in irregular wear. For example, with the advent of tires having improved winter performance by the addition of the foreign material such as short fiber or natural fiber to the tread rubber, noise is decreased and environmental problems such as damage to the road are mitigated. However, the short fiber or natural fiber is spherical and thus easily separated by external impact during motion of the tire, leading to irregular abnormal wear and partial side wear. Such problems shorten the lifetime of the tire and deteriorate the performance of the tire, thus making the users discontent.

### SUMMARY OF THE INVENTION

Accordingly, the present invention has been made keeping in mind the above problems occurring in the related art, such as difficulty realizing satisfactory wear resistance, rotation resistance and handling stability, which are other required properties of tires which must be maintained even when ice driving and braking performance are improved by the addition of short fiber or natural fiber as foreign material to a rubber composition for a tire tread, and an object of the present invention is to provide a rubber composition for a studless tire tread, which is capable of preventing abnormal wear and partial side wear of tires and improving ice braking properties by adding the predetermined polyaramide fiber having high Young's modulus and tensile strength.

In order to accomplish the above object, the present invention provides a rubber composition for a studless tire tread, comprising natural rubber (NR), styrene-butadiene rubber (SBR) and butadiene rubber (BR), as raw rubber, which are used in a typical rubber composition for a studless tire tread, and including 1-10 parts by weight of co-poly-(paraphenylene/3,4-oxydiphenylene terephthalamide) fiber based on 100 parts by weight of the solid content of the raw rubber.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a scanning electron micrograph (SEM) showing the surface of a conventional tread rubber sample containing the short fiber or natural fiber obtained in Comparative Example 2;
FIG. 2 is an SEM showing the surface of a tread rubber sample containing the aramide fiber obtained in Example 2, according to the present invention;
FIG. 3 is an SEM showing the surface of a conventional foamed rubber sample containing the short fiber or natural fiber obtained in Comparative Example 6; and
FIG. 4 is an SEM showing the surface of a foamed rubber sample containing the aramide fiber obtained in Example 4, according to the present invention.

### DESCRIPTION OF THE PREFERRED EMBODIMENTS

Hereinafter, a detailed description will be given of the present invention.

According to the present invention, a rubber composition for a tire tread includes natural rubber, styrene-butadiene rubber, and butadiene rubber, as raw rubber.

Natural rubber is naturally occurring rubber. Styrene-butadiene rubber, resulting from an emulsion polymerization process, has, specifically 20~25% of styrene, a Mooney viscosity at 100°C of 55-65, and a stress relaxation time gradient of -0.30~-0.38.

When the styrene-butadiene rubber has a high Mooney viscosity, it is difficult to process. If the styrene content or the stress relaxation time gradient falls outside of the above range, processibility becomes poor. The styrene-butadiene rubber satisfying such properties can improve ice braking performance and rotation resistance while maintaining wear resistance. In addition, butadiene rubber contained in the raw rubber is diene-based rubber, obtained through a solution polymerization process, and is composed of 96% or more of 1,4-cis-butadiene.

In addition, the raw rubber may further include a typical rubber mixing agent. Examples of the rubber mixing agent include process oil, a reinforcing agent, and other additives. The process oil is preferably composed of 5∼25% of an aromatic component, 25∼45% of a naphthene component, and 35∼65% of a paraffin component. If the composition of the process oil falls outside of the above range, that is, if the amount of the aromatic component is increased, ice braking performance is deteriorated. The process oil is used in an amount of 20-35 parts by weight, based on 100 parts by weight of the solid content of the raw rubber.

The carbon black and silica, serving as the reinforcing agent, are not particularly limited, and are used in an amount of 40-90 parts by weight based on 100 parts by weight of the solid content of the raw rubber. If the above amount is less than 40 parts by weight based on 100 parts by weight of the raw rubber, rotation resistance is increased but ice braking performance is deteriorated. On the other hand, if the above amount exceeds 100 parts by weight, processibility becomes poor due to poor dispersion of carbon black and silica, and the temperature is increased, thus reducing wear resistance.

In addition, the rubber composition for a tire tread of the present invention may further include other additives, such as zinc oxide, stearic acid, sulfur, an accelerating agent, an anti-aging agent, etc., which are typically added to the rubber for a tire tread.

The polyaramide fiber, which is characteristically added to the rubber composition for the tread of the present invention, is para-aramide fiber, and specifically co-poly-(paraphenylene/3,4-oxydiphenylene terephthalamide), having mechanical properties such as Young's modulus of 20-21 GPa and tensile strength of 3000-3250 MPa. Further, the surface of the fiber is treated with RFL (Resorcinol Formaldehyde Liquid) to enable the formation of a chemical bond with rubber, and thus low wear resistance, due to the use of conventional short fiber, may be alleviated. In addition, the addition of the para-polyaramide fiber having high Young's modulus and tensile strength results in high hardness, therefore increasing handling stability on dry roads.

When such para-polyaramide fiber is used in the rubber composition for a tire tread, it may function as a stud of a stud tire and therefore can further improve driving force and braking power on snowy and icy roads than when not used. Although conventional short fiber or natural fiber is spherically arranged upon mixing with rubber, the polyaramide fiber used in the present invention is oriented in its original linear shape thanks to its high Young's modulus and tensile strength, and thus is not easily separated by external impact. Also, such fiber, having high Young's modulus and tensile strength, functions to reinforce the mixed rubber.

The para-polyaramide fiber is contained in the rubber composition of the present invention in an amount of 1-10 parts by weight based on 100 parts by weight of the solid content of the raw rubber. If the amount of fiber exceeds 10 parts by weight, processibility becomes poor. Further, excess use thereof results in poor dispersibility in rubber, undesirably decreasing wear resistance.

In addition, the rubber composition of the present invention may further include a foaming agent, which is used in an amount of 3-4 parts by weight based on 100 parts by weight of the raw rubber. The rubber composition of the present invention containing the foaming agent is foamed rubber having 30-120 independent pores having a diameter of 20-140 µm per unit area of 1 mm².

A better understanding of the present invention may be obtained through the following examples, which are set forth to illustrate, but are not to be construed as the limit of the present invention.

### Examples 1 and 2 and Comparative Examples 1 to 4

Natural rubber, styrene-butadiene rubber, butadiene rubber, carbon black, and typical additives were mixed at mixing ratios shown in Table 1 below to prepare a rubber composition, which was then vulcanized, thus obtaining a rubber sample.

The low-temperature hardness test, ice friction coefficient, and viscoelasticity of the sample thus obtained were measured. The results are given in Table 1 below.

Specifically, the low-temperature hardness was determined using an ASTM shore A hardness meter (hardness at -20°C) after allowing the sample to stand in a temperature-controlled chamber for 1 hour. The ice friction coefficient was determined by measuring the friction coefficient of the sample at 30 km/hr on an icy road frozen for 24 hours using a dynamic friction tester (available from Sunny Koken).

The wear test was conducted using a Lambourn wear tester. The wear performance was considered excellent when the index was high. The braking performance index was determined by subjecting a tire, manufactured at a size of 195/65R 15T using the rubber composition, to a braking test on various roads and then converting the results into the index. The higher the index, the shorter the braking distance.

**TABLE 1**

| | C.Ex.1 | C.Ex.2 | C.Ex.3 | C.Ex.4 | Ex.1 | Ex.2 |
|---|---|---|---|---|---|---|
| NR/BR/SBR | 50/30/20 | 50/30/20 | 50/30/20 | 50/30/20 | 50/30/20 | 50/30/20 |
| Carbon/Silica | 40/20 | 40/20 | 40/20 | 40/20 | 40/20 | 40/20 |
| Process Oil | 25 | 25 | 25 | 25 | 25 | 25 |
| Zinc Oxide | 3 | 3 | 3 | 3 | 3 | 3 |
| Stearic Acid | 2 | 2 | 2 | 2 | 2 | 2 |
| Anti-Aging Agent | 2 | 2 | 2 | 2 | 2 | 2 |
| Short Fiber or Natural Fiber | -- | 4 | - | -- | -- | -- |
| Aramide Short Fiber¹* | - | - | 4 | - | - | - |
| Aramide Fiber^{2*} | -- | -- | -- | 12 | 4 | 8 |
| Hardness at -20°C | 50 | 51 | 51 | 55 | 51 | 52 |
| Ice Friction Coeff. | 0.35 | 0.41 | 0.40 | 0.42 | 0.40 | 0.45 |
| Lambourn Wear Index | 100 | 93 | 85 | 92 | 101 | 99 |
| Results of Actual Car Test | | | | | | |
| Snow/Ice Braking | 100 | 105 | 105 | 106 | 105 | 110 |
| Dry Road Braking | 100 | 95 | 100 | 95 | 100 | 99 |
| Wear Resistance | 100 | 93 | 86 | 92 | 101 | 98 |
| 1*.Aramide Short Fiber: | Poly-(paraphenylene terephthalamide (Chemical Formula), Kevlar (Trade Name), available from Dupont, Young's Modulus of 25 GPa, Tensile Strength of 2100 MPa. | | | | | |
| 2*.Aradmide Fiber: | Co-poly-(paraphenylene/3,4-oxydiphenylene terephthalamide) fiber, trade name of Technora, available from Teijin, Young's modulus of 20GPa, tensile strength of 3100Mpa, surface treatment with RFL (Resorcinol Formaldehyde Liquid). | | | | | |
| SBR: | Styrene Butadiene Rubber, having 20~25% of styrene, Mooney viscosity at 100°C of 55-65, stress relaxation time gradient of -0.30~-0.38. | | | | | |
| BR: | Butadiene Rubber having 96% or more of 1,4-cis butadiene, resulting from solution polymerization. | | | | | |
| Process Oil: | 5 wt% of aromatic component, 45 wt% of naphthene component, and 50 wt% of paraffin component. | | | | | |

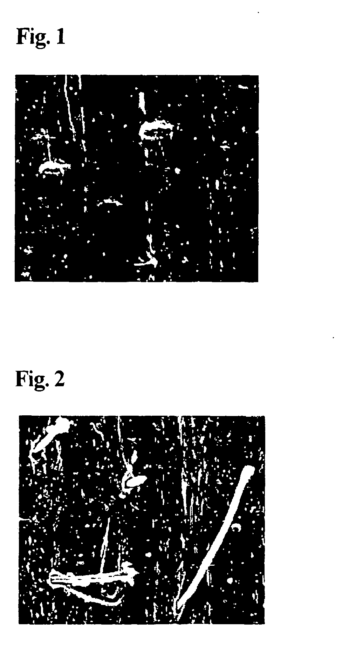

The SEM showing the surface of each of the rubber samples obtained in Comparative Example 4 and Example 2 is shown in FIGS. 1 and 2.

As is apparent from FIGS. 1 and 2, the short fiber or natural fiber used is present in a spherical shape, whereas the para-polyaramide fiber of the present invention is present in its original linear shape in the rubber.

From the results of Table 1, it can be seen that the sample of Comparative Example 2 using short fiber or natural fiber has higher braking power on snowy and icy roads than that of the sample of Comparative Example 1 without the use of the above fiber, but has decreased wear resistance due to the use of the above fiber.

In addition, the sample of Comparative Example 3 using the aradmide short fiber has lower tensile strength than that of the sample of Example 1, and the aramide short fiber used does not undergo surface treatment with RFL and thus has low bondability with the rubber, leading to decreased wear resistance.

However, in the samples of Examples 1 and 2 using predetermined para-polyaramide fiber according to the present invention, snow and ice braking performance is increased, as in the use of short fiber or natural fiber, and as well, wear resistance is not decreased.

As shown in FIGS. 1 and 2, the short fiber or natural fiber does not preserve its original shape due to the high shear force required for mixing with rubber and is thus present in a spherical shape. However, since the para-polyaramide fiber used in the present invention is present in its original linear shape thanks to its high Young's modulus and tensile strength, it is not easily separated by external impact. Further, the para-polyaramide fiber, having high Young's modulus and tensile strength, can form a chemical bond with rubber through surface treatment with RFL, and therefore functions as a reinforcing agent in the mixed rubber.

However, if the para-polyaramide fiber exhibiting such effects is excessively used, low-temperature hardness is greatly increased as in Comparative Example 4 and enveloping performance with the road is decreased, resulting in low braking performance on snowy and icy roads. In particular, since the above fiber is poorly dispersed in the rubber, wear performance is deteriorated. Hence, the para-polyaramide fiber should be contained in the rubber composition of the present invention in an amount of 10 parts by weight or less.

### Examples 3 and 4 and Comparative Examples 5 to 8

Natural rubber, styrene-butadiene rubber and butadiene rubber, serving as raw rubber, were mixed with typical additives including carbon black and silica and a foaming agent according to the mixing ratios shown in Table 2 below to prepare a rubber composition, which was then vulcanized, thus obtaining a rubber sample.

In Examples 3 and 4 and Comparative Example 7, the para-polyaramide fiber according to the present invention was used. The sample of Comparative Example 1 corresponded to typical foamed rubber, and the sample of Comparative Example 2 was conventionally composed of short fiber or natural fiber to increase ice braking performance. In Comparative Example 4, as the aramide fiber, short fiber under the trade name of Kevlar was used, instead of the fiber used in the rubber composition of the present invention.

The low-temperature hardness test, ice friction coefficient, and viscoelasticity of the rubber samples thus obtained were measured. The results are given in Table 2 below.

The number of pores of the foamed rubber was observed with the naked eye and the number of independent pores having a diameter of 20-140 µm per 1 mm² of the rubber sample was counted. The low-temperature hardness was determined using an ASTM shore A hardness meter (hardness at -20°C) after allowing the sample to stand in a temperature-controlled chamber for 1 hour.

The ice friction coefficient was determined by measuring the friction coefficient of the sample at 30 km/hr on an icy road frozen for 24 hours using a dynamic friction tester (available from Sunny Koken). The wear test was conducted using a Lambourn wear tester. The wear performance was considered excellent when the index was high.

In the actual car test, the braking performance index was determined by subjecting a tire manufactured at a size of 195/65R 15Q using the rubber composition to a braking test on various roads and then converting the results into the index. The higher the index, the shorter the braking distance.

The wear resistance was determined in a manner such that a tire manufactured at a size of 195/65R 15Q was run a predetermined distance, after which weight loss of the tire was measured and then represented by a relative index. The handling stability was determined by measuring lap time upon running the tire manufactured in the above size at a predetermined distance, which was then represented by a relative index.

**TABLE 2**

| | C.Ex.5 | C.Ex.6 | C.Ex.7 | C.Ex.8 | Ex.3 | Ex.4 |
|---|---|---|---|---|---|---|
| NR/BR/SBR | 50/30/20 | 50/30/20 | 50/30/20 | 50/30/20 | 50/30/20 | 50/30/20 |
| Carbon Black/Silica | 40/20 | 40/20 | 40/20 | 40/20 | 40/20 | 40/20 |
| Process Oil | 25 | 25 | 25 | 25 | 25 | 25 |
| Zinc Oxide | 3 | 3 | 3 | 3 | 3 | 3 |
| Stearic Acid | 2 | 2 | 2 | 2 | 2 | 2 |
| Anti-Aging Agent | 2 | 2 | 2 | 2 | 2 | 2 |
| Foaming Agent | 4 | 4 | 4 | 4 | 4 | 4 |
| Short Fiber or Natural Fiber | - | 4 | - | - | - | - |
| Polyaramide Fiber¹* | - | - | - | 4 | - | - |
| Polyaramide Fiber²* | - | - | 12 | - | 4 | 8 |
| SBR: | Styrene Butadiene Rubber having 20∼25% of styrene, Mooney viscosity at 100°C of 55-65, stress relaxation time gradient of -0.30~-0.38, resulting from emulsion polymerization. | | | | | |
| BR: | Solution Polymerized Butadiene Rubber having 96% or more of 1,4-cis butadiene, resulting from solution polymerization. | | | | | |
| Process Oil: | 5 wt% of aromatic component, 45 wt% of naphthene component, and 50 wt% of paraffin component. | | | | | |
| Anti-aging Agent: | 6PPD | | | | | |
| 1*.Aramide Short Fiber: | Poly-(paraphenylene terephthalamide (Chemical Formula), Kevlar (Trade Name), available from Dupont, Young's Modulus of 25 GPa, Tensile Strength of 2100 MPa. | | | | | |
| 2*.Aradmide Fiber: | Co-poly-(paraphenylene/3,4-oxydiphenylene terephthalamide) fiber, trade name of Technora, available from Teijin, Young's modulus of 20GPa, tensile strength of 3100Mpa, surface treatment with RFL (Resorcinol Formaldehyde Liquid). | | | | | |
| Hardness at -20(C (Shore A) | 50 | 51 | 57 | 52 | 51 | 52 |
| Ice Friction Coefficient (u) | 0.35 | 0.41 | 0.42 | 0.39 | 0.40 | 0.45 |
| Lambourn Wear Index | 100 | 93 | 92 | 85 | 101 | 99 |
| No. of Independent Pores having Diameter of 20∼140 (m per unit area (1mm2) | 100 | 100 | 100 | 100 | 100 | 100 |
| Results of Actual Car Test | | | | | | |
| Snow/Ice Braking | 100 | 105 | 106 | 105 | 105 | 110 |
| Dry Road Braking | 100 | 95 | 95 | 100 | 100 | 99 |
| Wear Resistance | 100 | 93 | 92 | 85 | 101 | 98 |
| Handling Stability (Dry Road) | 100 | 103 | 109 | 104 | 105 | 108 |

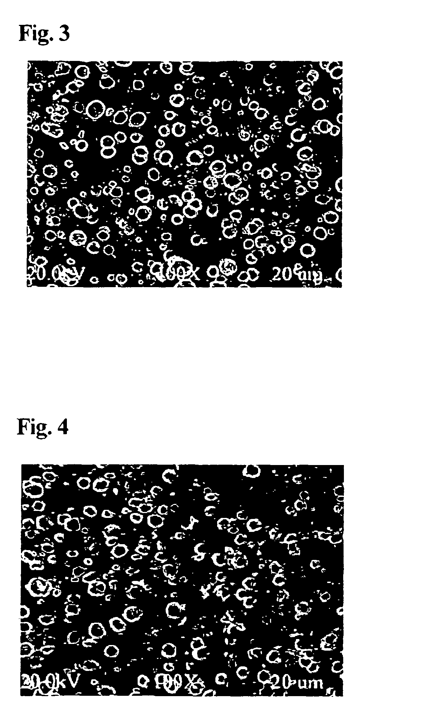

The SEM showing the surface of each of the rubber samples obtained in Comparative Example 6 and Example 4 is given in FIGS. 3 and 4.

As shown in FIGS. 3 and 4, the used short fiber or natural fiber is present in a spherical shape, while the para-polyaramide fiber of the present invention is present in its original linear shape in the rubber.

In Table 2, upon comparing Comparative Example 5 with Comparative Example 6, although the sample of Comparative Example 5, in which short fiber or natural fiber is added to foamed rubber, has braking power on snowy and icy roads and handling stability on dry roads superior to those of the sample of Comparative Example 6 without the use of the above fiber, wear resistance is decreased due to the addition of such short fiber or natural fiber.

However, the samples of Examples 3 and 4, in which predetermined para-polyaramide fiber is added to the foamed rubber, have increased snow/ice braking performance and handling stability on dry roads as in the use of conventional short fiber or natural fiber, and improve wear resistance, which is decreased by the addition of conventional short fiber or natural fiber.

This is because the short fiber or natural fiber does not preserve its original shape due to the high shear force required for mixing with rubber and thus is present in a spherical shape, however the para-polyaramide fiber used in the present invention is present in its original linear shape thanks to its high Young's modulus and tensile strength, and thus is not easily separated by external impact. Further, the para-polyaramide fiber functions to reinforce the mixed rubber by virtue of its high Young's modulus and tensile strength.

As in Comparative Example 7, when excess para-polyaramide fiber according to the present invention is added to the foamed rubber, the low-temperature hardness is greatly increased and enveloping performance with the road is decreased, and thus the braking performance is not further increased on snowy and icy roads. In particular, excess addition of the polyaramide fiber results in poor dispersion in the rubber, undesirably decreasing wear performance.

Even though the polyaramide fiber is used, when the aramide fiber, different from the polyaramide fiber of the present invention, is added as in Comparative Example 8, the tensile strength is lower than in Comparative Example 6. Moreover, since the surface of the short fiber used is not treated with RFL, bondability with the rubber is low, leading to decreased wear resistance.

As described hereinbefore, the present invention provides a rubber composition for a studless tire tread. In the rubber composition for a tire tread containing para-polyaramide fiber according to the present invention, the added para-polyaramide fiber may function as a stud of a stud tire, and thus driving force and braking power on snowy and icy roads may be increased.

In addition, although conventional short fiber or natural fiber is spherically arranged when mixed with rubber, the polyaramide fiber is present in its original linear shape thanks to its high Young's modulus and tensile strength, and thus is not easily separated by external impact. Further, the polyaramide fiber, having high Young's modulus and tensile strength, can reinforce the mixed rubber, therefore maintaining wear resistance, leading to the prevention of abnormal wear and partial side wear of the tire.

Moreover, the foamed rubber composition of the present invention can increase handling stability on dry roads and wear resistance while exhibiting the excellent ice braking performance of conventional foamed rubber.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A rubber composition for a studless tire tread, comprising natural rubber, styrene-butadiene rubber and butadiene rubber, as raw rubber, and including 1~10 parts by weight of co-poly-(paraphenylene/3,4-oxydiphenylene terephthalamide) fiber based on 100 parts by weight of a solid content of the raw rubber.

2. The rubber composition as set forth in claim 1, wherein the co-poly-(paraphenylene/3,4-oxydiphenylene terephthalamide) fiber has Young's modulus of 20~21 GPa and tensile strength of 3000~3250 MPa.

3. The rubber composition as set forth in claim 1, wherein the co-poly-(paraphenylene/3,4-oxydiphenylene terephthalamide) fiber is prepared by subjecting short fiber to surface treatment with resorcinol formaldehyde liquid.

4. The rubber composition as set forth in claim 1, wherein the rubber is foamed rubber having 30~120 independent pores having a diameter of 20~140 µm per unit area of 1 mm².

5. The rubber composition as set forth in claim 4, further comprising 3~4 parts by weight of a foaming agent based on 100 parts by weight of the solid content of the raw rubber.

6. The rubber composition as set forth in claim 1 or 4, further comprising a rubber mixing agent.

7. The rubber composition as set forth in claim 6, wherein the rubber mixing agent is selected from the group consisting of carbon black, silica, process oil, zinc oxide, stearic acid, sulfur, an accelerating agent, and an anti-aging agent.

8. The rubber composition as set forth in claim 7, wherein the carbon black and silica are contained in an amount of 40~90 parts by weight based on 100 parts by weight of the solid content of the raw rubber.

9. The rubber composition as set forth in claim 7, wherein the process oil is contained in an amount of 20~35 parts by weight based on 100 parts by weight of the solid content of the raw rubber.

## Patentansprüche

1. Eine Gummizusammensetzung für ein Reifenprofil eines Winterreifen, die Kautschuk, Styrol-Butadien-Gummi und Butadien-Gummi als Rohgummi umfasst, und die 1~10 Gewichtsanteile an Co-poly-(paraphenylene/3,4'oxydiphenylene terephthalamide) Faser basierend auf 100 Gewichtsanteile eines festen Inhalts des Rohgummis einschließen.

2. Die Gummizusammensetzung nach Anspruch 1, bei der die Co-poly-(paraphenylene/3,4'oxydiphenylene terephthalamide) Faser über ein Young'sches Modul von 20-21 GPa und eine Reißfestigkeit von 3000-3250 MPa verfügen.

3. Die Gummizusammensetzung nach Anspruch 1, bei der die Co-poly-(paraphenylene/3,4'oxydipherlylene terephthalamide) Faser zubereitet wird, indem kurze Fasern einer Oberflächenbehandlung mit Resorcin-Formaldehyd Flüssigkeit unterzogen werden.

4. Die Gummizusammensetzung nach Anspruch 1, bei der es sich bei dem Gummi um Schaumgummi handelt, das 30~120 unabhängige Poren mit einem Durchmesser von 20~140 µm pro einer Flächeneinheit von 1 mm² besitzt.

5. Die Gummizusammensetzung nach Anspruch 4, die weiterhin 3~4 Gewichtsanteile eines Treibmittels basierend auf 100 Gewichtsanteile eines festen Inhalts des Rohgummis enthält.

6. Die Gummizusammensetzung nach Anspruch 1 oder 4, die weiterhin ein Gummimischmittel enthält.

7. Die Gummizusammensetzung nach Anspruch 6, bei der das Gummimischmittel aus der Gruppe ausgewählt wird, die aus Kohlenschwarz, Silica, Prozessöl, Zinkoxid, Stearinsäure, Schwefel, einem Beschleunigungsmittel, und einem Anti-Aging-Mittel besteht.

8. Die Gummizusammensetzung nach Anspruch 7, bei der die Kohlenschwarz und Silice in einem Volumen von 40~90 Gewichtsanteilen basierend auf 100 Gewichtsanteile des festen Inhalts des Rohgummis enthalten sind.

9. Die Gummizusammensetzung nach Anspruch 7, bei der das Prozessöl in einem Volumen von 20~35 Gewichtsanteilen basierend auf 100 Gewichtsanteile des festen Inhalts des Rohgummis enthalten ist.

## Revendications

1. Une composition de caoutchouc pour un profil de pneu non clouté, comprenant du caoutchouc naturel, du caoutchouc styrène-butadiène et du caoutchouc butadiène, en tant que caoutchouc brut, et comportant 1~10 parts en poids de fibre co-poly- (paraphénylène/3, 4-oxydiphénylène terephthalamide) basé sur 100 parts en poids d'une teneur en matière sèche du caoutchouc brut.

2. La composition de caoutchouc telle qu'elle est présentée dans la revendication 1, dans laquelle la fibre co-poly- (paraphénylène/3, 4-oxydiphénylène terephthalamide) a un module de Young de 20~21 GPa et une résistance à la traction de 3000~3250 MPa.

3. La composition de caoutchouc telle qu'elle est présentée dans la revendication 1, dans laquelle la fibre co-poly- (paraphénylène/3, 4-oxydiphénylène terephthalamide) est préparée en soumettant la fibre courte à un traitement de surface avec du liquide résorcinol formaldéhyde.

4. La composition de caoutchouc telle qu'elle est présentée dans la revendication 1, dans laquelle le caoutchouc est un caoutchouc mousse ayant 30~120 pores indépendants présentant un diamètre de 20~140 µm par unité de surface de 1 mm².

5. La composition de caoutchouc telle qu'elle est présentée dans la revendication 4, comprenant en outre 3~4 parts en poids d'un agent moussant basé sur 100 parts en poids de la teneur en matière sèche du caoutchouc brut.

6. La composition de caoutchouc telle qu'elle est présentée dans la revendication 1 ou 4, comprenant en outre un agent de mélange du caoutchouc.

7. La composition de caoutchouc telle qu'elle est présentée dans la revendication 6, dans laquelle l'agent de mélange du caoutchouc est choisi dans le groupe composé de noir de carbone, silice, huile à usiner, oxyde de zinc, acide stéarique, soufre, un agent accélérateur, et un agent antivieillissement.

8. La composition de caoutchouc telle qu'elle est présentée dans la revendication 7, dans laquelle le noir de carbone et le silice sont contenus dans une quantité de 40~90 parts en poids basé sur 100 parts en poids de la teneur en matière sèche du caoutchouc brut.

9. La composition de caoutchouc telle qu'elle est présentée dans la revendication 7, dans laquelle l'huile à usiner est contenue dans une quantité de 20~35 parts en poids basé sur 100 parts en poids de la teneur en matière sèche du caoutchouc brut.
